# EUROPEAN PATENT SPECIFICATION

(11) **EP 3 649 714 B1**
(45) Date of publication and mention of the grant of the patent: **27.07.2022**
(21) Application number: 18742601.0
(22) Date of filing: 21.06.2018
(51) Int. Cl.: H02G 5/08

(54) **JUNCTION BOX FOR ELECTRICAL INSTALLATIONS OF THE TYPE WITH PREFABRICATED ELECTRICAL CONDUITS**
VERTEILERKASTEN FÜR ELEKTRISCHE EINRICHTUNGEN VOM TYP VORGEFERTIGTER LEITUNGSFÜHRUNGEN
BOÎTE DE JONCTION POUR INSTALLATIONS ÉLECTRIQUES DU TYPE CONDUIT ÉLECTRIQUE PRÉFABRIQUÉ

(30) Priority: 04.07.2017 IT 201700075023
(43) Date of publication of application: 13.05.2020
(73) Proprietor: DKC POWER SOLUTIONS S.R.L., 00144 Roma (IT)
(72) Inventor: REGOSA, Flavio, 25133 Brescia (IT); REGOSA, Mattia, 25133 Brescia (IT)
(74) Representative: Corradini, Cesare
(86) International application number: PCT/IB2018/054595
(87) International publication number: WO 2019/008463

(56) References cited:
- DE-U1- 29 610 481
- GB-A- 2 218 578
- GB-A- 2 298 970
- US-A- 2 861 139

## Description

### TECHNICAL FIELD OF THE INVENTION

The present invention relates to a junction box for electrical installations of the type with prefabricated electrical conduits. In particular, the box is configured to be used as a junction box for electrical installations of the type with busways.

The present invention moreover relates to a system comprising a junction box for electrical installations of the type with prefabricated electrical conduits and at least one prefabricated electrical conduit.

### PRIOR ART

Prefabricated electricity conduits, known as busways in the technical sector, are electricity lines of a modular type which extend in space following predetermined pathways obtained by straight conductor elements and curved conductor elements appropriately disposed in succession (for example elements enabling deviating of the pathway by a right angle). The elements, whether straight or curved, generally comprise: a casing having a compartment open towards the outside; a plurality of conductor bars, such as for example a phase conductor bar; a neutral conductor bar and a protective earthing bar; a cover fixed to the casing for closing the compartment. The conductor bars are housed inside the compartment and are individually covered with a sheath made of an insulating material. For the connection between the different elements, split terminals project from the ends of the casing, connected to the bars, and an earthing element is connected to the casing.

Accessory components are associated to the prefabricated electricity conduits, among which a junction box, which serves to draw the electrical current at a point at which a user is installed which is to be powered by said current. The assembly of the junction box to the prefabricated electrical conduit enables current to be drawn from the conductor bars located inside the prefabricated electrical conduit.

Known junction boxes, once they are assembled on the prefabricated electrical conduit, instantaneously determine electrical connection between the elements inside the box and the conductor bars.

In the light of this, the Applicant has detected a problem relating to the safety of junction boxes and accordingly to the safety of operators tasked with installing, maintaining and/or replacing junction boxes on prefabricated electrical conduits.

Substantially, when a junction box is installed, the problem stems from the fact that when the operator installs the box on the prefabricated electrical conduit, as the electrical connection takes place at the same time as installation, components inside the junction box are immediately powered up and the operator risks electrocution.

Further, when performing maintenance or replacement tasks on the junction box or some of its components, as the box is already electrically connected (at suitable current power points) to the conductor bars of the prefabricated electrical conduit and the operator has to work on the box, the operator risks being electrocuted by the voltage of the components disposed inside the junction box.

Safety problems for the installer and/or the maintenance person can generally arise whenever the installer or maintenance person has to deal with elements of the prefabricated electrical conduits, in particular windows giving access to the conductor bars.

Other examples of devices are known.

Document GB2298970 A describes a slide cover assembly for a busbar.

Document GB2218578 A discloses a connection device for electric distribution systems comprising busbars enclosed in a duct, wherein the connection device is provided with a coded safety cover.

Document DE29610481 U1 discloses a locking slide for outlet openings of a busbar trunking system.

Document US2861139 A discloses a bus duct plugs with cover operated retractable contact fingers.

### OBJECTS OF THE INVENTION

In the light of the above, the main object of the present invention is to provide a junction box for electrical installations of the type with prefabricated electrical conduits that is able to overcome one or more of the drawbacks of the prior art that have been described previously.

A further object of the present invention is to provide a junction box for electrical installations of the type with prefabricated electrical conduits that has greater safety both in the electrical connection of the junction box to the prefabricated electrical conduits, and in the disconnection of the junction box from the prefabricated electrical conduits, both in the operations of maintenance and/or replacement of the junction box.

A further object of the present invention consists of enabling the junction box and prefabricated electrical conduits to be connected only in a safe condition for an operator.

It is a further object of the present invention to make available a junction box for electrical installations of the prefabricated conduit type, which is at the same time particularly simple both to manufacture and to install, and which is further particularly sturdy, reliable and safe once installed.

Lastly, an object of the present invention is to manufacture a box that enables the operator and/or the maintenance person to interact safely with components of the prefabricated electrical conduits, in particular with the windows giving access to the conductor bars.

The objects indicated above and still others are achieved by a junction box for electrical installations of the type with prefabricated electrical conduits, by a system comprising a box and at least one prefabricated electrical conduit and/or by a process of installing a box according to the appended claims and/or with the following aspects, which can be taken independently of one another or in combination with the individual technical characteristics disclosed in the detailed description or in combination with any of the appended claims.

### SUMMARY

The scope of the invention is defined by independent claim 1. Other aspects of the invention are defined by dependent claims 2-15.

In particular, the invention relates to a box, suitable for being used as junction box for electrical installations of the type with prefabricated electrical conduits, including one or more conductor bars, comprising a plurality of walls assembled together in such a way as to define an internal volume of the box, and further comprising a mounting means configured to be operatively interposed between said box, in particular between at least one wall of said box, and a component associated with said prefabricated electrical conduit, said mounting means comprising:
- a positioning means for positioning said box relative to said prefabricated electrical conduit, said positioning means comprising at least one fixed arm and being disposed on said box in such a way as to project at least partially from one of said walls;
- a moving means for moving said component associated with said prefabricated electrical conduit, said moving means being disposed on said box in such a way as to project at least partially from the same wall that said positioning means project from,
wherein said moving means comprises at least one movable arm, said movable arm is configured to rotate relative to said fixed arm in opposition contrast to a hinge with an elastic element, such as a spring, and the free end of said at least one movable arm is shaped in such a way as to be able to grip a portion of said component associated with said prefabricated electrical conduit.

In one aspect, said positioning means comprises a pair of fixed arms and said moving means comprises a pair of movable arms.

In one aspect, said fixed arms and said movable arms are disposed symmetrically on said box.

In one aspect, said positioning means and said moving means protrude from said first opening fashioned in a first wall of said walls of said box and are positioned in such a way that the installation of said box with said prefabricated electrical conduit requires that said first opening is disposed in front of said component associated with said prefabricated electrical conduit.

In a further independent aspect, the invention relates to a system comprising:
- a box according to any one of the preceding aspects;
- a prefabricated electrical conduit, comprising:
   - at least one conductor bar
   - a containment casing comprising at least one conductor bar;
   - at least one opening fashioned in said casing for access to said at least one conductor bar;
   - a closing window for closing said at least one opening;
characterized in that said component associated with said prefabricated electrical conduit coincides with said window.

In one aspect, said window is slidable relative to said casing, the sliding of said window taking place in particular in opposition to at least one elastic element.

In one aspect, said elastic element comprises at least one spring.

In one aspect, said window comprises an abutment means configured to be gripped by the free end of said at least one movable arm.

In one aspect, said casing comprises at least one housing configured to accomodate the free end of at least one fixed arm.

In one aspect, during the penetration of the free end of said at least one fixed arm into said at least one housing, said abutment means is engaged in the free end of said at least one movable arm and the hinge between said at least one fixed arm and said at least one movable arm determines the opening of said window.

In one aspect, not covered by the claims, during the progressive penetration of the free end of said at least one fixed arm into said at least one housing, said at least one movable arm rotates relative to said at least one fixed arm, causing the opening of said window.

In one aspect, not covered by the claims, the reciprocal disposition of said at least one fixed arm relative to said at least one movable arm is such that between said fixed arm and the respective movable arm a first and a second angle are geometrically defined, the first angle being the angle of lesser size of the first and the second angle, the first and the second angle being explementary angles.

In one aspect, not covered by the claims, the first angle has a size smaller than 90°.

In one aspect, not covered by the claims, the first angle is configured to have the size thereof modified by the rotation of said at least one movable arm relative to the respective fixed arm.

In one aspect, not covered by the claims, the rotation of said at least one movable arm relative to the respective fixed arm causes a variation of the size of the first end of the second angle. In one aspect, not covered by the claims, the variation of the size of the first angle is an increase of the size of the first angle. In one aspect, not covered by the claims; in the condition in which said at least one fixed arm completely penetrates inside the respective housing, the size of the first angle is comprised between 60° and 90°. In one aspect, not covered by the claims, in the condition in which said at least one fixed arm completely penetrates the inside of the respective housing, the size of the first angle is comprised between 80° and 90°, and it is optionally substantially equal to 90°.

### BRIEF DESCRIPTION OF THE FIGURES

This description will be provided herein below with reference to the attached drawings, which are provided solely for the purpose of providing approximate and thus non-limiting examples, and in which:
figure 1 shows a junction box for electrical installations of the type with prefabricated electrical conduits according to one embodiment of the present invention;
figure 2 shows the junction box of figure 1 in a view in which some walls have been removed from the box;
figures 3 and 4 show exploded axonometric views of a plurality of functional elements of a control member and of a containment body containing the box of figure 1 ;
figure 5 shows the plurality of functional elements of figures 3 and 4, on which a control member is engaged;
figure 6 shows a section view of a functional element of figures 3, 4 and 5;
figure 7 shows an exploded axonometric view of the functional element of figure 6;
figure 8 shows a detail of the junction box di figure 2;
figure 9 shows a system according to an embodiment of the present invention in which a detail of the junction box of figure 1 is shown, the junction box being placed next to a containment casing containing conductor bars; a dashed line moreover shows the insertion directions of mounting means of the junction box; figure 10 shows the system in figure 9 in an intermediate step of the installation of the junction box in the containment casing;
figure 11 is a side view of figure 10;
figure 12 shows the system of the preceding figures, in which the junction box has been installed in the containment casing and the door of the box is in an open condition;
figure 13 shows the system in figure 12, in which the door is in the closing step and is in an intermediate condition between the open condition illustrated in figure 12 and the closed condition illustrated in figures 14A and 15; this intermediate position was reached by closing of the door from the open condition of the door illustrated in figure 12;
figure 14 shows a cross section of the system of figure 13 and shows, in the open condition of the door, the functional elements positioned frontally relative to the conductor bars and spaced apart therefrom (retracted position);
figure 14A shows a cross section of the system of figure 15 and shows, in the closed condition of the door, the functional elements engaged on respective conductor bars (extracted position);
figure 15 shows an axonometric view of the system of figure 14A, from which some walls of the junction box have been removed and in which the door of the junction box is in the closed condition, which is reached by proceeding with the closing step of the door shown in figure 13;
figure 16 shows the system in figure 15, in which the door is in the opening step and is in an intermediate condition between the closed condition of figure 15 and the open condition of figure 12; this intermediate position was reached by opening the door from the closed condition of the door illustrated in figure 15;
figure 17 shows the system in figure 16, in which the door is in a completely open condition, reached by proceeding with the step of opening the door illustrated in figure 16;
figure 18 shows a detail of the junction box of figure 2 illustrating a lock applied to the door and cooperating with an abutment of the junction box in order to enable the door to be locked in the closed condition.

### DETAILED DESCRIPTION

With reference to the figures, with 1 a box according to the invention is indicated in its entirety that is suitable for be used as junction box for electrical installations of the type with prefabricated electrical conduits. Preferably, the box 1 according to the invention is a box suitable for being used as a junction box for electrical installations of the type with busways.

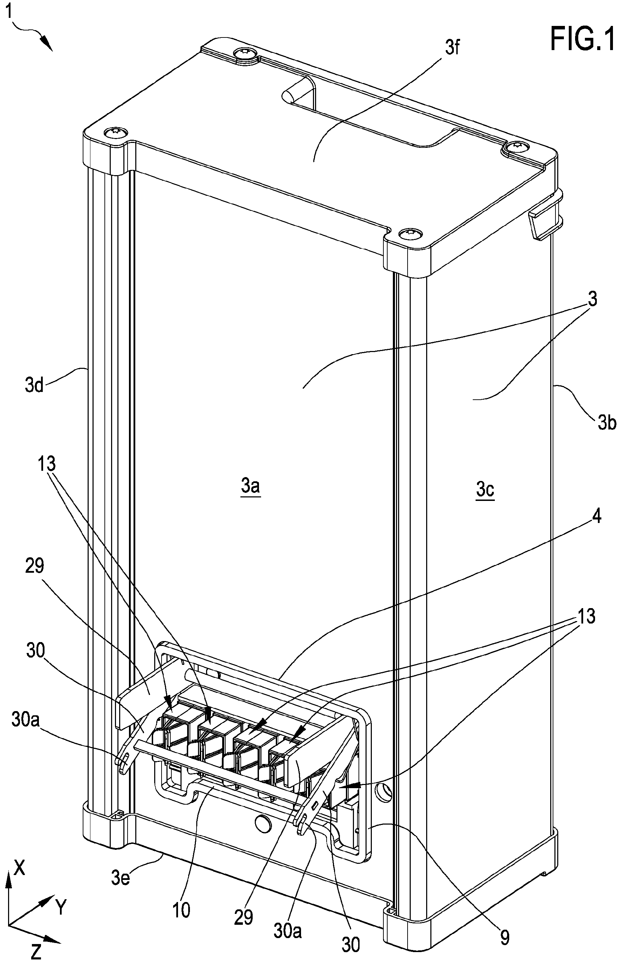

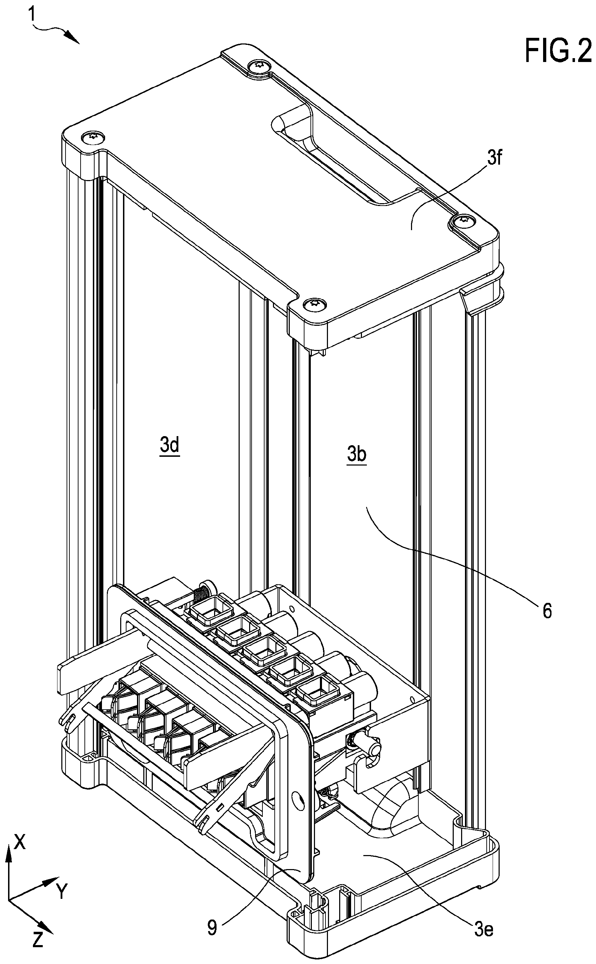

As illustrated in figures 1 and 2, the box 1 extends along a first direction of extension X, along a second direction of extension Y and along a third direction of extension Z. As illustrated in figure 1, these directions of extension are transverse to one another, and are optionally substantially orthogonal to one another.

The box 1 comprises a plurality of walls 3 assembled together in such a way to define an internal volume of the box 1. The walls comprise side walls and bottom walls. The side walls comprise a first wall 3a, a second wall 3b, a third wall 3c and a fourth wall 3d, which laterally delimit the internal volume of the box 1. As illustrated in the appended figures, the first wall 3a and the second wall 3b are opposite and parallel to one another; in the same way, the third wall 3c and the fourth wall 3d are opposite and parallel to one another. In particular, the third wall 3c is interposed and transverse to the first and to the second wall 3a, 3b, whereas the fourth wall 3d is opposite the third wall 3c and is also interposed and transverse to the first and to the second wall 3a, 3b. The bottom walls comprise a first bottom wall 3e and a second bottom wall 3f. As illustrated in figure 2, the first bottom wall 3e and the second bottom wall 3f are respectively opposite one another.

As illustrated in the appended figures, the first wall 3a has a first opening 4 and the second wall 3b has a second opening 5.

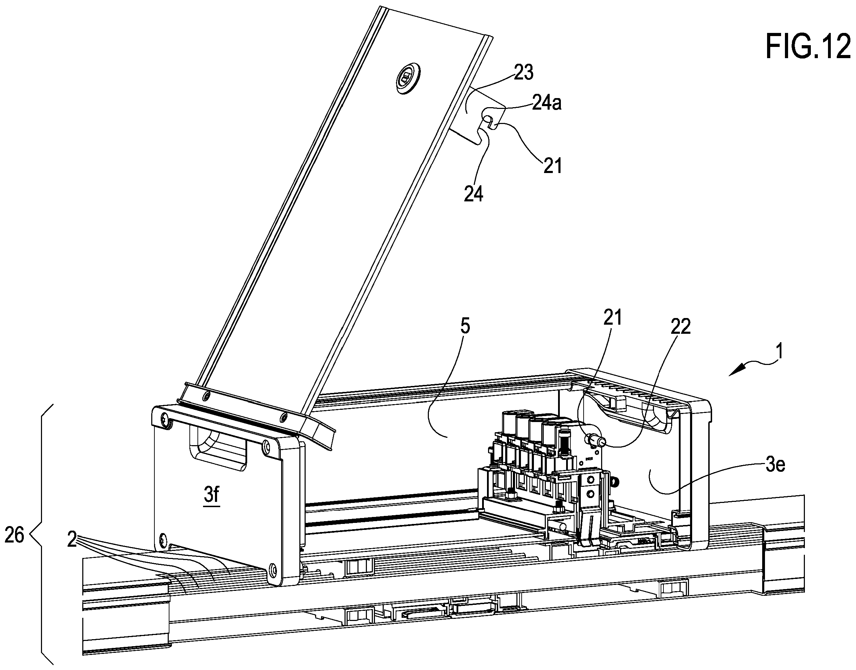

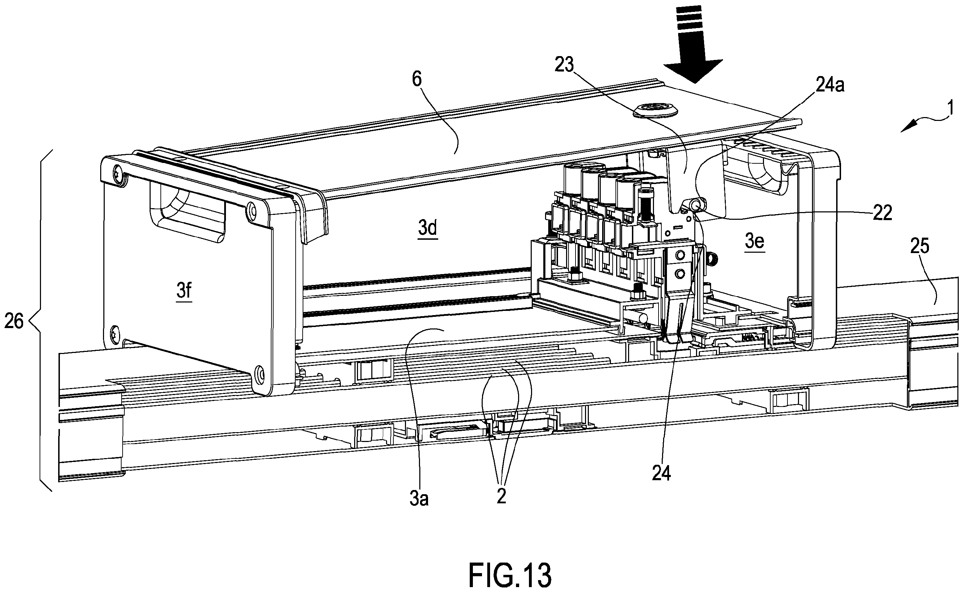

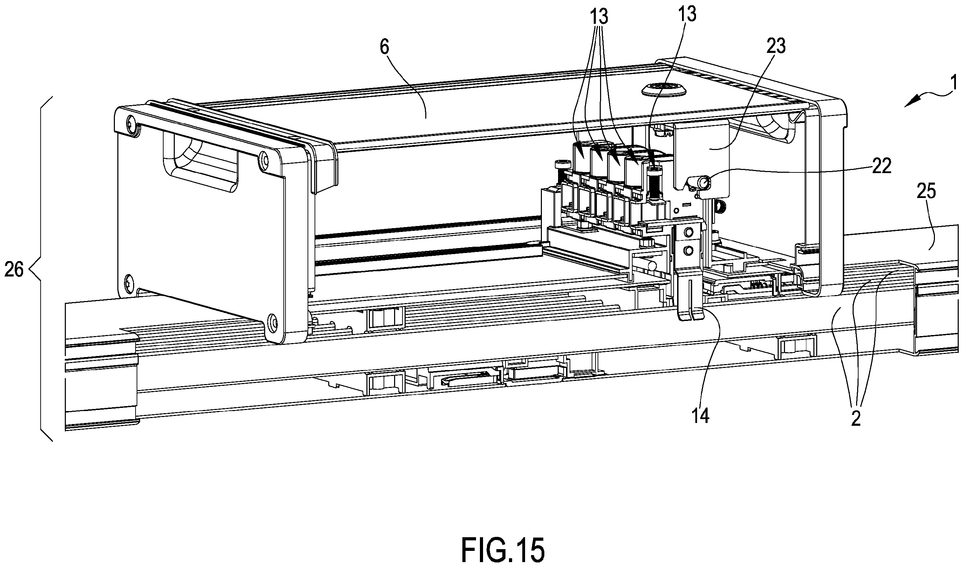

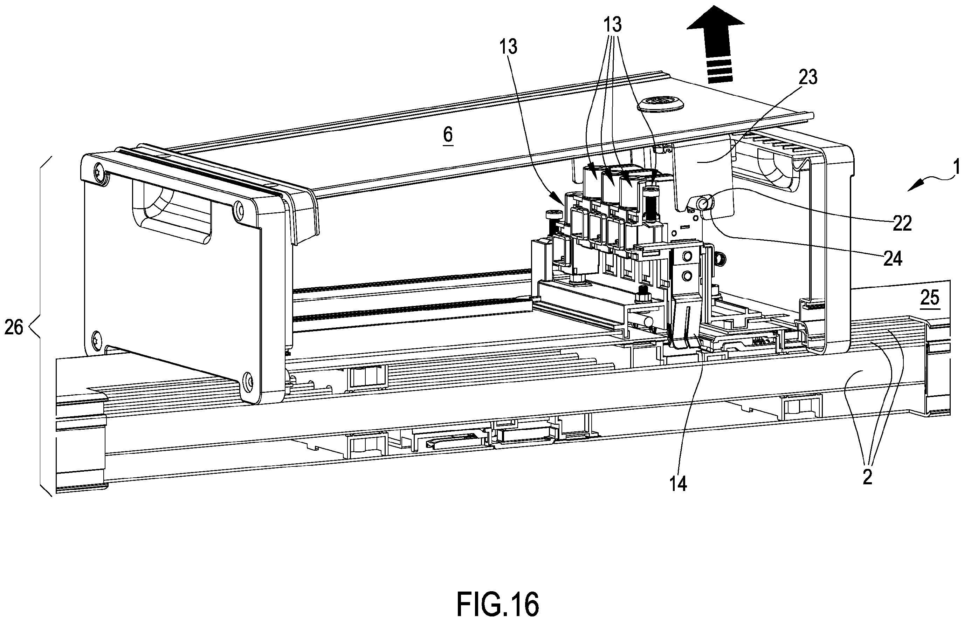

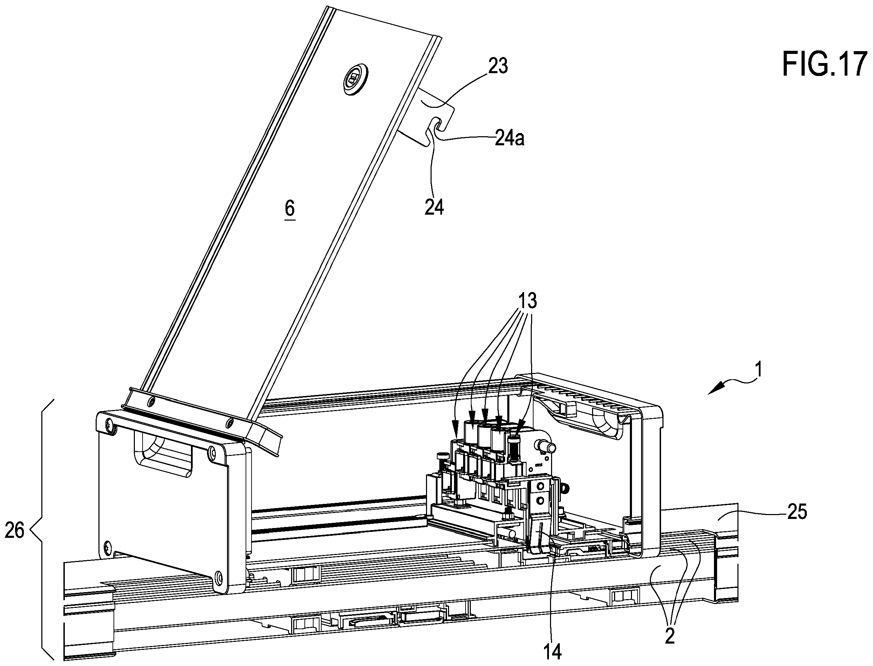

The box 1 also has a door 6 configured, according to the position or operating condition thereof, to close the second opening 5 or make accessible the second opening 5. The door 6 is substantially configured to operate between a closed condition which it occludes the second opening 5 and prevents to access thereto and an open condition in which it enables to access to the second opening 5. The closed condition of the door is for example illustrated in figures 1, 2, 8, 10, 11, 14A, 15 and 18, whereas the open condition of the door is illustrated in figures 12, 14 and 17. The door 6, when disposed in the closed condition, is configured to make inaccessible the internal volume of the box 1 from the outside of the same box 1. This inaccessibility of the internal volume of the box 1 when the door 6 is closed is particularly advantageous in terms of the safety of the box 1, as will become apparent further on in this description. The door 6 is further configured to operate between a plurality of intermediate conditions or positions between the open condition and the closed condition to enable the transition between said two conditions. Intermediate conditions of the door 6 (which are however functionally equivalent to open conditions of the door 6) are for example illustrated in figures 13 and 16.

In the embodiment illustrated in the appended figures, the door 6 has an extension corresponding substantially to the extension of the second wall 3b. Further, in the illustrated embodiment, the door 6 is hinged at the second bottom wall 3f and the door 6 is opened and closed by rotation of the same door 6. In one variant, the door 6 can be configured to be moved by translation and/or by rotation-translation to make accessible, or occlude, the second opening 5.

According to an alternative embodiment that is not illustrated in the appended figures, the door 6 can consist of a portion of the second wall 3b, or of an additional wall, configured to be moved relative to a main fixed portion of the second wall 3b, or relative to the second wall 3b, to make accessible or close the second opening 5.

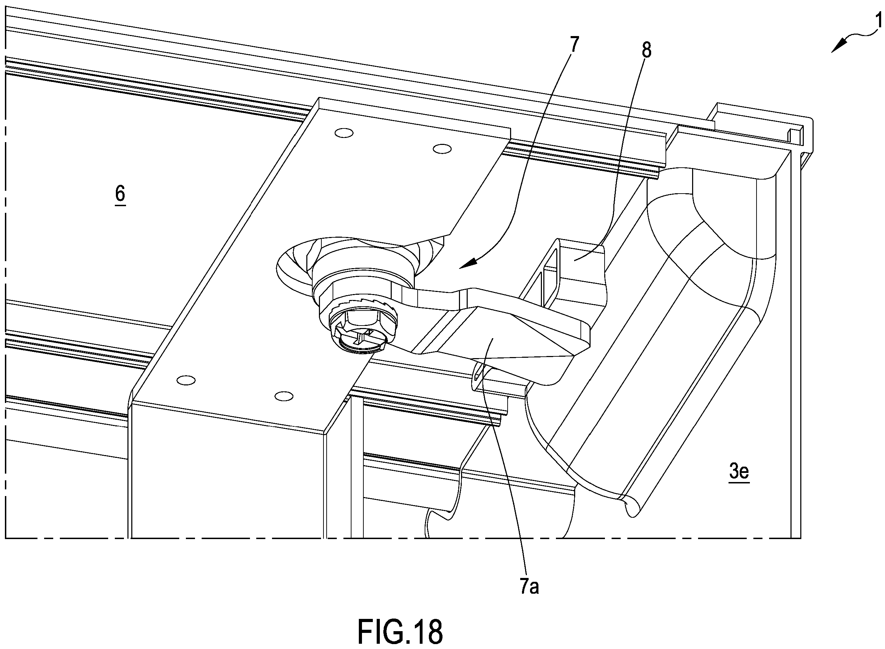

The door 6 can further comprise a lock 7 configured to enable the door 6 to be locked in the closed condition and prevent accidental opening of the door 6. In order to enable stable closing of the door 6, the box 1 further comprises an abutment 8 configured to cooperate with the lock 7 to enable the door to be locked in the closed condition. In this respect, figure 18 illustrates a lock 7 provided with a bolt 7a, which cooperates with the abutment 8 to ensure closing of the door 6. In this embodiment, the abutment 8 is substantially shaped as a ridge and is disposed at the first bottom wall 3e of the box 1. In one variant, the abutment 8 can take the shape of a slit or a cavity in which the bolt 7a of the lock 7 is placed or inserted in the closed condition of the door 6 to maintain the door 6 in the closed condition.

Preferably, the box 1 comprises one or more profiled elements 3a, 3b, 3c, 3d, which correspond substantially to the walls and are disposed in such a way as to extend along the first direction of extension X. Preferably, the profiled elements 3a, 3b, 3c, 3d are made of metal material. The profiled elements 3a, 3b, 3c, 3d can comprise adapting means suitable for enabling a variation of the dimension of the box 1 along the first direction of extension X (i.e. a variation in the length of the box 1).

The box 1 further comprises a containment body 9, housed at least partially inside the internal volume of the box 1, as illustrated in figures 1 and 2. As illustrated in figure 1, the containment body 9 comprises an inlet port 10 and is housed in the box 1 in such a way as to communicate with the first opening 4. Preferably, the inlet port 10 of the containment body 9 is disposed substantially at or inside the first opening 4, as illustrated in figure 1. The containment body 9 has a plurality of housings 11 and a plurality of guides 12, the technical function of which will be illustrated in greater detail below. The containment body 9 also has separating means 11a that is suitable for delimiting and separating the housings 11.

The box 1 further comprises a plurality of functional elements 13, each of which is suitable for drawing the electrical current from a respective conductor bar 2. Each functional element 13 can be substantially in the form of, or comprise, a contact, or bulb, configured to draw a single electrical phase from a respective conductor bar 2 (that is part of the busway).

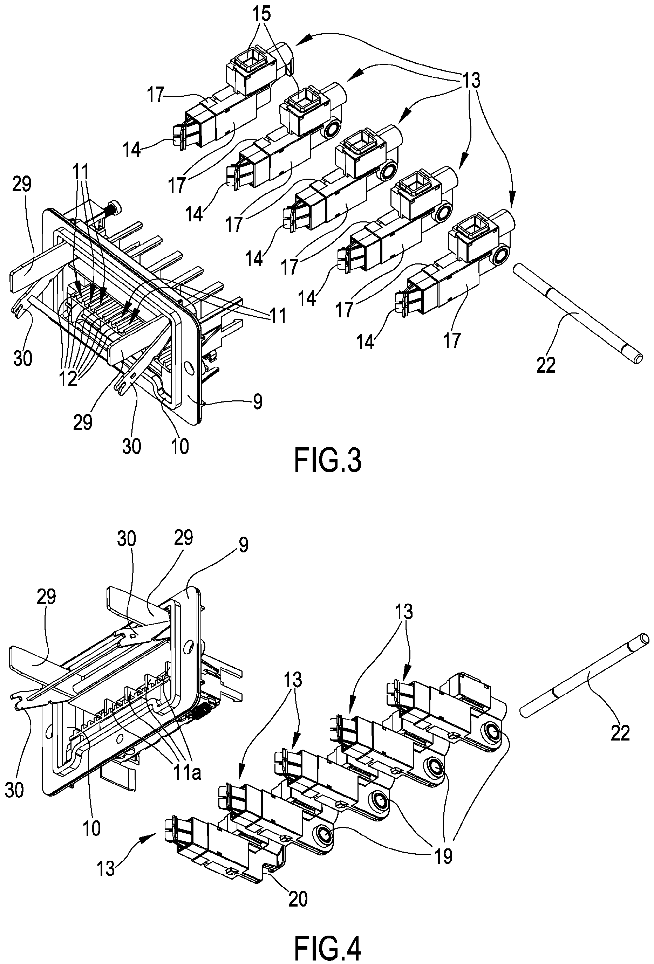

The functional elements 13 are housed at least partially inside the containment body 9. In particular, as illustrated in figure 2, all the functional elements 13 share the same containment body 9 and are housed in the containment body 9 at respective housings 11. The housings 11 are for example illustrated in figure 3.

Each functional element 13 is engaged in the containment body 9 so as to extend partially inside the containment body 9 and partially outside the containment body 9. In particular, each functional element 13 is configured to project at least partially from the containment body 9.

In terms of the structural profile, each functional element 13 comprises a first terminal 14 and a second terminal 15. In the context of the present description, the term "terminal" means an "electrical terminal", i.e. an at least partially electrically conductive element configured to draw and/or transmit electrical current and/or to be connected to electrical conductors configured to draw and/or transmit electrical current. The first terminal 14 is configured to open out elastically to connect the functional element 13 to the respective conductor bar 2, whereas the second terminal 15 is suitable for housing an electrical conductor intended to carry the electrical current drawn through the functional element 13 outside the internal volume of the box 1. The second terminal 15 can be for example in the shape of a terminal block. The first terminal 14 comprises a first end 14a and a second end 14b that are opposite to each other. The first end 14a is housed inside the containment body 9, whereas the second end 14b projects from the containment body 9. Preferably, the first terminal 14 is configured to open out elastically at least at the second end 14b.

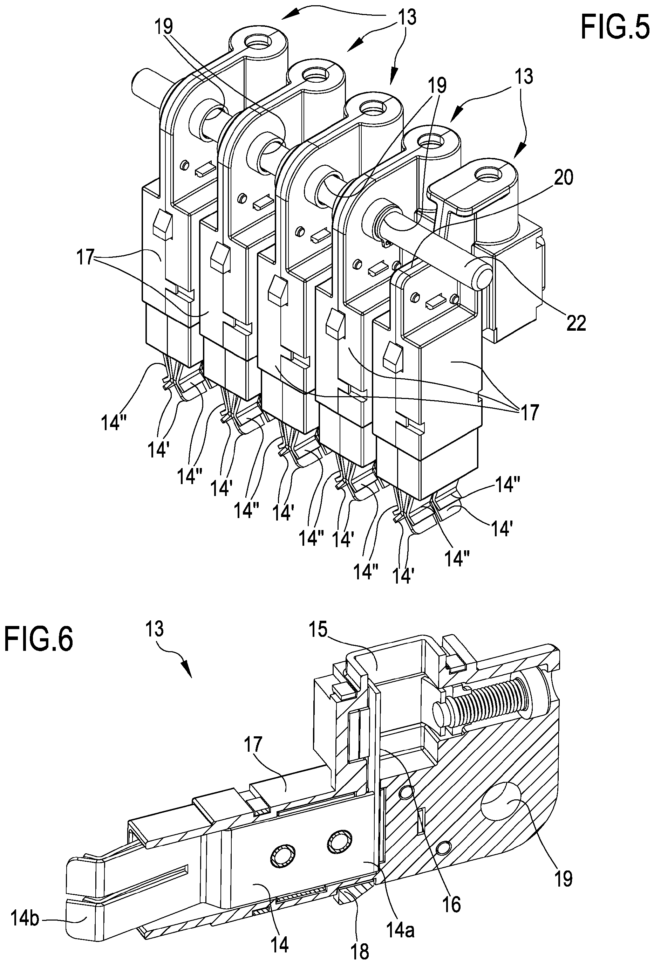

The first terminal 14 comprises at least one electrically conductive plate 14', and in particular at least two electrically conductive plates 14', which are elastically deformable at the second end 14a of the terminal. In particular, the electrically conductive plates 14' are configured to elastically approach and move away from one another, and in particular to open out to enable a respective conductor bar 2 to be housed between the same plates 14'. Optionally, each electrically conductive plate 14' can comprise a first conductive plate 14' and a second conductive plate 14" that substantially have a profile corresponding to what is illustrated in figure 5. Preferably, the presence of a first conductive plate 14' and of a second conductive plate 14" is a technical solution designed to structurally strengthen the first terminal 14.

Each functional element 13 can further comprise an electrical continuity element 16 disposed between the first terminal and the second terminal and configured to ensure the electrical continuity between the first and the second terminal. The electrical continuity element 16 can in turn take the form of an electrically conductive, preferably flat plate.

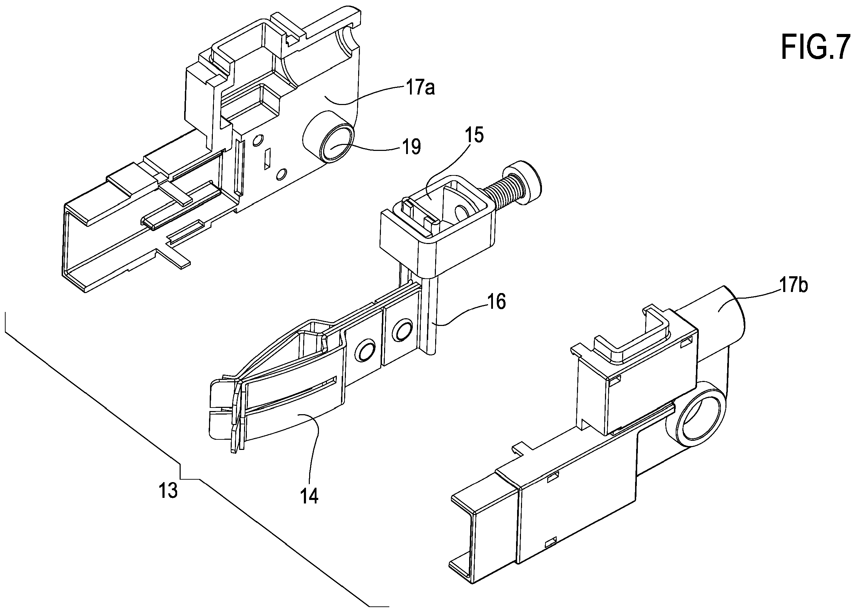

In terms of the structural profile, each functional element further comprises an enclosure 17, housing at least the first end 14a of the first terminal 14, whereas the second end 14b of the first terminal 14 projects from the enclosure 17. The enclosure 17 further houses, at least partially, the second terminal 15, which can project relative to the enclosure 17 or be substantially set into the enclosure 17. The enclosure 17 also houses the electrical continuity element 16. Optionally, as illustrated in figure 7, the enclosure 17 comprises two half shells 17a and 17b configured to be assembled together.

Each functional element 13 comprises a projection 18 housed in a respective guide 12 of the containment body 9. Positioning the projection 18 at the guide 12 enables the translation movement of the functional element 13 to be directed from an extracted position to a retracted position and/or vice versa. These operating positions of the functional elements are disclosed below.

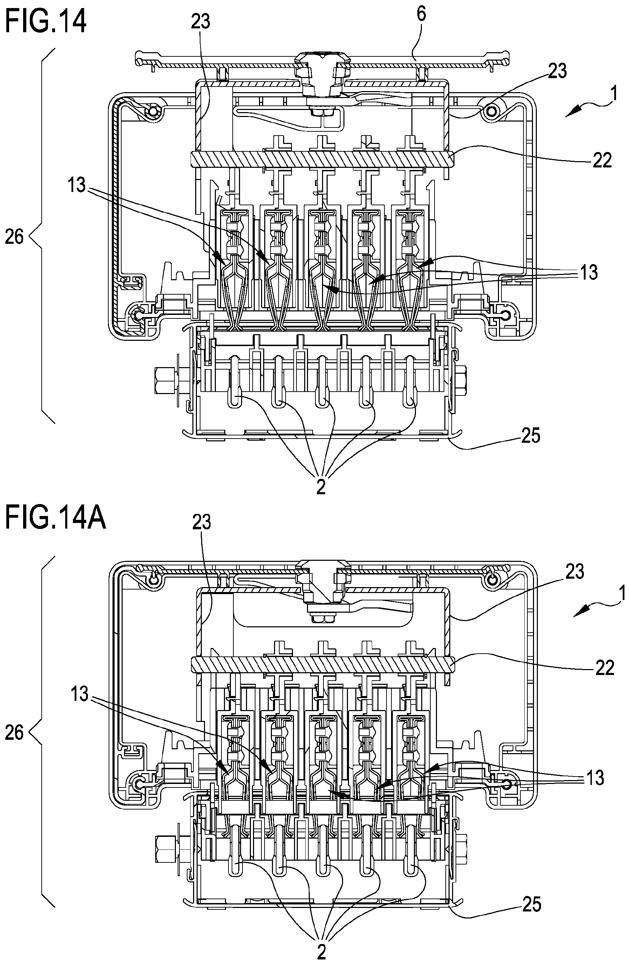

In terms of operating profile, each functional element 13 can take on, relative to the box 1 and to the containment body 9, an extracted position (see figure 14A), in which it can be connected to the respective conductor bar 2, and a retracted position (see figure 14), in which it cannot be connected to the respective conductor bar 2. The transition from the retracted position to the extracted position, and optionally vice versa, is enabled by the sliding of the projection 18 of each functional element 13 relative to the respective guide12. As will be seen in greater detail below, the passage of at least one functional element 13 from the retracted position to the extracted position is determined automatically by the closing movement of the door 6.

As illustrated in the appended figures, the functional elements 13 can be substantially of two types; a first type of functional element has a seat 19, which can for example consist substantially of a through hole, and a second type of functional element has an abutment surface 20. Apart from the embodiment disclosed and illustrated in detail, the essential difference between the aforesaid first type and the aforesaid second type of the functional elements consists of the fact that the first type makes the functional element suitable for receiving control stress coming from two opposite directions, whereas the second type makes the functional element suitable for receiving control stress coming from a single direction, control stress coming from the opposite direction not having any effect on the functional elements of the second type. In the embodiment illustrated in the appended figures, the box 1 comprises a plurality of functional elements 13 belonging to the first type, and a single functional element 13 belonging to the second type. In particular, as is clear from figure 5, in the appended figures four functional elements 13 are illustrated belonging to the first type and a single functional element 13 belonging to the second type; nevertheless, a different number of functional elements 13 can be provided according to the specific needs and/or intended use of the box 1. Preferably, the single functional element 13 belonging to the second type is intended to be connected to an earth conductor bar 2. Returning to the box 1, it must be said that this further comprises safety means 21 operatively interposed between the door 6 and the functional elements 13. The safety means 21 is configured in such a way that each functional element 13 is connected to the respective conductor bar 2 only in concomitance with the closing of the door 6. Preferably, the closure of the door 6 determines, by the safety means 21, the electrical and mechanical connection of each functional element 13 to the respective conductor bar 2. As will be seen in greater detail below, the closure of the door 6 causes the transition of the functional elements 13 from the retracted position to the extracted position and thus causes the at least partial exit of the functional elements 13 from the internal volume of the box 1 to enable the electrical connection of each functional element 13 to the respective conductor bar 2. In the extracted position, each functional element 13 is configured to surround or enclose at least partially (sufficiently to obtain a reliable electrical contact), by elastic deformation of the first terminal 14, a respective conductor bar 2. The condition in which each functional element 13 encloses a respective conductor bar is illustrated in figure 14A. Moreover, the safety means 21 is further configured in such a way that opening of the door 6 causes the disconnection of at least one functional element 13 from the respective conductor bar. Preferably, the disconnection of at least one functional element 13 from the respective conductor bar caused by the opening of the door 6 is of electrical and mechanical type. According to the embodiment illustrated in the appended figures, the safety means 21 is configured to cause, upon opening of the door 6, the disconnection of all the functional elements 13 of the first type (i.e. of the type that has a seat 19).

In order to act on the functional elements 13 by movement of the door 6, the safety means 21 comprises a control member 22 housed in the internal volume of the box 1.

The safety means 21 further comprises at least one activation element 23 of the control member 22, configured to operate on the control member 22. Preferably, the activation element 23 is applied to the surface of the door 6 facing towards the functional elements 13. In particular, the activation element 23 comprises a cam surface 24 suitable for acting as an abutment for the control member 22 and to cause the movement thereof relative to the box 1, both in the closing and opening step of the door 6. As illustrated for example in figure 12, the profile of the cam 24 is such as to define a recess 24a, inside which the control member 22 is housed when the door 6 is in the closed condition. Optionally, to the surface of the door 6 facing towards the functional elements, two activation elements 23 of the control member are applied, each of which comprises a respective cam surface 24 suitable for abutting on an end portion of the control member 22. Substantially, the activation element 23 causes the control member 22 to move solidly constrained to the door 6 by movement of the same door 6; in this regard, see figures 13 and 16.

The control member 22 is associated with the functional elements 13 and is configured to impart thereupon stresses and cause the corresponding effects thereof. In particular the control member 22, in the case of functional elements 13 of the first type, is inserted into the seat 19, whereas in the case of functional elements 13 of the second type, it is shaped for cooperating with the abutment surface 20 in the step of closing the door 6. In particular, the control member 22 is inserted into the seat 19 in such a way as to obtain a bilateral constraint between the control member 22 and at least one functional element 13, in such a way that closure of the door 6 automatically causes, through the activation element 23, the application of a push of the control member 22 on the functional element 13 such as to obtain a movement of the same away from the box (and consequently the exiting from the first opening 4 of a portion of the functional element 13). On the other hand, the opening of the door 6, again by virtue of the bilateral constraint between the control member 22 and the at least one functional element 13, causes a push of the control member 22 on the functional element 13 such as to obtain a greater penetration of the functional element 13 into the box. Interfacing between the control member 22 and the abutment surface 20 represents instead a monolateral constraint, meaning that the (first) closure of the door 6 causes the functional element 13 to move away from the box and on the other hand the functional element 13 is completely immune to receiving pushes in concomitance with the opening of the door 6.

The control member 22 is configured to cooperate, under the control of the activation element 23, with the seats 19 and/or with the abutment surface 20 of the functional elements 13. Substantially, the control member 22 operates on the functional elements in such a way that when the door 6 closes the functional elements 13 of the first type translate from the retracted position to the extracted position, together with the single functional element 13 of the second type. Preferably, the control member 22 determines the transition of the functional elements of the first type from the retracted position to the extracted position by translation together with the control member 22, whereas it pushes at the abutment surface 20 the single functional element 13 of the second type to cause the transition thereof from the retracted position to the extracted position. Vice versa, when the door 6 opens, the control member 22 determines the transition of the functional elements 13 of the first type from the extracted position to the retracted position, whereas it does not act on the single functional element 13 of the second type.

According to the embodiment shown in the appended figures (see in particular figures 3, 4 and 5), the control member 22 is a pin which is engaged on the functional elements 13 of the first type at the respective seats; in substance, as illustrated in figure 5, the control member 22 can be a through hole passing through the seats 19 of the functional elements 13 of the first type. Being a through pin 22, when the door 6 is closed, the pin 22 enables the transition of all the functional elements 13 from the retracted position to the extracted position by dragging through translation the functional elements 13 of the first type and pushing at the abutment surface 19 the single functional element 13 of the second type, whereas upon the opening of the door 6, the opening direction of the door 6 being opposite the closing direction of the door 6, the pin 22 drags through translation the functional elements 13 of the first type from the extracted position to the retracted position but does not act on the single functional element 13 of the second type, which remains in contact with the earth phase (see figure 16 in this respect). Preferably, the direction of extension of the pin 22 is substantially orthogonal to the direction along which the translation movement of the functional elements 13 is enabled.

In order to be installed on the prefabricated electrical conduits (and the conductor bars contained therein), the box 1 is configured to be engaged on a containment casing 25 containing conductor bars 2. As illustrated in the appended figures, the conductor bars 2 are housed inside the containment casing 25. In the following part of the present description, the assembly consisting of the box 1, of the conductor bars 2 and of the containment casing 25 is defined as a system 26. As illustrated in the appended figures, the installation direction of the conductor bars 2, and thus of the containment casing 25 and of the box, is preferably a horizontal direction. Nevertheless, this horizontal installation direction is a preferential direction and does not limit the present description by any means.

In order to enable the box 1 to engage on the casing 25, the box 1 has mounting means 27. When assembling the box on the casing 25, the mounting means 27 is operatively interposed between the box 1 and a component 28 associated with the prefabricated electrical conduit (containing the conductor bars 2). In particular, as will become more apparent below, the component 28 with which the mounting means 27 is associated is a component 28 of the containment casing 25.

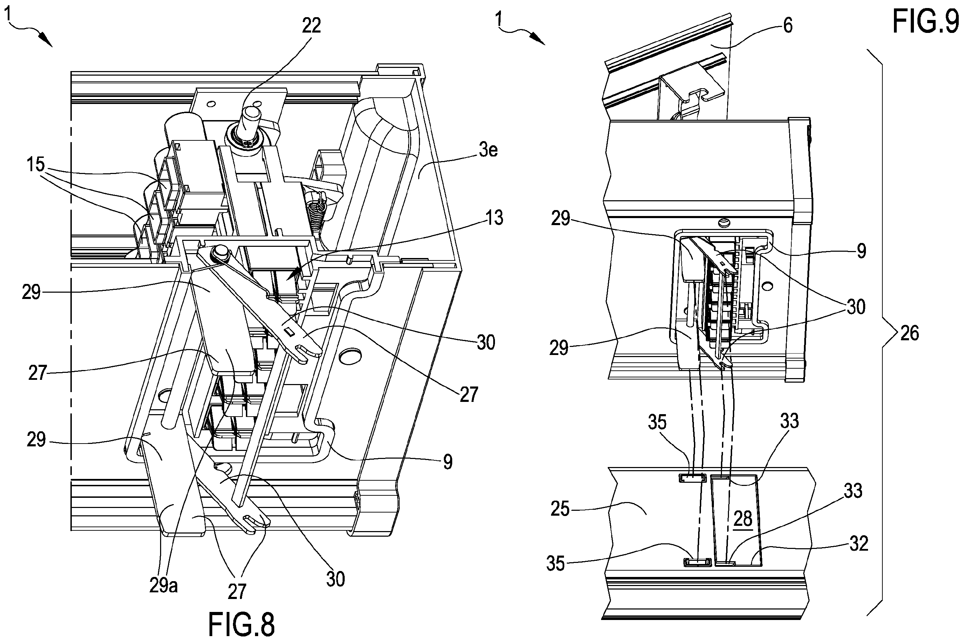

The mounting means 27 comprises positioning means 29 of the box 1, which is configured to position the box 1 relative to the prefabricated electrical conduit and to the conductor bars 2 contained therein. The positioning means 29 is disposed on the box 1 in such a way as to project at least partially from one of the walls of the box 1, as illustrated for example in figure 1 and in figure 9.

The mounting means 27 further comprises moving means 30, which is configured to move the component 28 associated with the prefabricated electrical conduit. The moving means 30 is disposed on the box 1 in such a way as to project at least partially from the same wall from which said positioning means 29 projects (see for example figures 1 and 9). Preferably, as illustrated for example in figure 1, the wall from which both the positioning means 29 and the moving means 30 project is the second wall 3b. As illustrated in figure 1, the positioning means 29 and the moving means 30 project from the first opening 4 and are configured in such a way that the box 1 can be installed on the prefabricated electrical conduit only in a condition in which the first opening 4 is disposed opposite the component 28 associated with the prefabricated electrical conduit.

According to the invention and as illustrated in the appended figures, the positioning means 29 comprises at least one fixed arm and the moving means 30 comprises at least one movable arm. Preferably, the positioning means 29 comprises a pair of fixed arms and the moving means 30 comprises a pair of movable arms. As illustrated in figure 1 and in figure 9, the fixed arms 29 and the movable arms 30 are disposed symmetrically on the box 1.

According to the invention, one free end 30a of the movable arms 30 is shaped in such a way as to be able to grip a portion of the component 28 associated with the prefabricated electrical conduit.

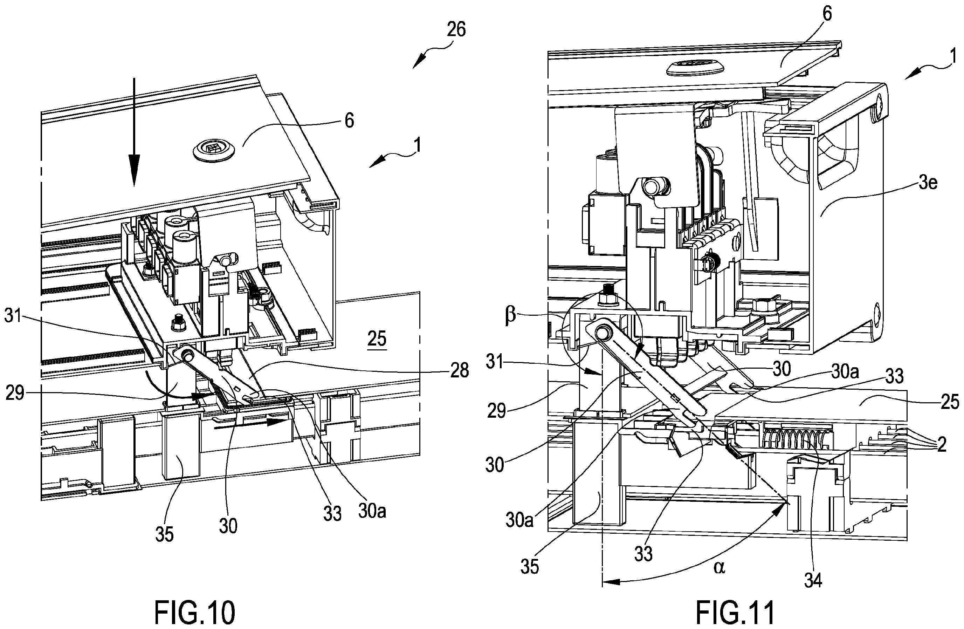

In terms of the structural profile, each movable arm 30 is configured to rotate relative to a respective fixed arm 29 in opposition to a hinge with an elastic element or spring 31. As illustrated in figure 11, the reciprocal disposition of each fixed arm 29 relative to the respective movable arm 30 is such that between the fixed arm 29 and the respective movable arm 30 a first angle α and a second angle β are defined geometrically. The first angle α is the angle of smaller size of the first and the second angle; preferably the first angle α has a size smaller than 90°. The first and the second angle α, β are linked by the following geometric constraint; the first angle α and the second angle β are angles that are explementary to one another, i.e. the sum of the sizes of the first and of the second angle α, β is equal to 360°. Accordingly, a variation of the size of one between the first angle α and the second angle β due to the movement of the movable arms 30 causes a variation in the size of the other of the first and second angle α, β. In particular, a decrease of the size of the first angle α causes a corresponding increase of the size of the second angle β and vice versa. The increase and the decrease of the angles α, β necessarily is of a corresponding size, inasmuch as the sum of the sizes of the first angle α and of the second angle β is maintained constant and is equal to 360°. Substantially, the first and the second angle α, β are configured to have their size modified by the rotation of the movable arms 30 relative to the respective fixed arms 29. In particular, during the process of installation of the box 1 on the casing 25 (which will be disclosed in greater detail below), the movable arms 30 are configured to rotate away from the respective fixed arms 29 and thus at the angular level an increase is witnessed of the size of the first angle α and of a decrease of the size of the second angle β.

The technical characteristics of the containment casing 25 of the conductor bars 2 will now be disclosed that enable safe, simple and reliable engagement or installation of the box 1 on the casing 25.

The casing 25 has at least one opening 32 to access the conductor bars 2 from outside the casing 1. The opening 32 is configured to be closed, or made accessible, by a window 28 provided by the casing 25. In fact, in function of its operating position, the window 28 is configured to close or make accessible the opening 32 of the casing 25. According to the embodiment illustrated in the appended figures, the window 28 coincides with the aforesaid component associated with the prefabricated electrical conduit. Preferably, the window 28 comprises abutment means 33 configured to be gripped by the free end 30a of the movable arms 30 (see figures 10 and 11). As illustrated in figure 10, the movement of the window 28 that enables to access to the opening 32 and thus to the conductor bars 2 or the closure of the opening 32 can be a sliding movement; in substance, the window 28 is slidable relative to the rest of the casing 25. As illustrated in figure 11, the sliding of the window 28 takes place in opposition to at least one elastic element 34, such as for example a spring. The spring 34 ensures that the window 28 automatically closes the opening 32 when the movable arms 30 are disengaged from the abutment means 33 of the window 28 and ensures that the window 28 remains in the closed condition when the movable arms 30 are not engaged in the abutment means 33 of the window 28.

In another possible embodiment that is not illustrated in the appended figures, the window 28 can be moved, to make available or close the opening, by rotational or rotational-translational motion.

Further, in order to enable the fixed arms 30 to be positioned relative to the casing 25, the casing 25 comprises a housing 35 for each fixed arm 29 (see in particular figures 9, 10 and 11). Each housing 35 is configured to accomodate the free end 29a of a respective fixed arm 29.

A process for installing the box 1 in the containment casing 25 is disclosed below. Substantially, the process envisages arranging a box 1 of the type disclosed previously and a containment casing 25 containing at least one conductor bar 2. In the initial step of the process, the door 6 of the box 1 is preferably in the open condition and the functional elements 13 are accordingly in the retracted position. The process then envisages engaging the box 1 on the containment casing 25, such that the free ends of the fixed arms 29 penetrate inside the respective housings 35, enabling correct positioning of the box 1 relative to the casing 25; at the same time, the free ends 30a of the movable arms 30 engage abutment means 33 of the window 28. As previously said, during the progressive penetration of the free end 29a of the fixed arms 29 into the respective housings 35, the movable arms 30 rotate relative to the respective fixed arms 29, causing the opening of the window 28. By progressively approaching the box 1 to the casing 25, as far as the point in which the fixed arms 29 reach maximum penetration inside the respective housings 35 (until the end stroke), the hinge with an elastic element (spring) 31 previously disclosed, which is provided between the fixed arms 29 and the movable arms 30, causes opening up by rotation of the movable arms 30 relative to the respective fixed arms 29 and, accordingly, the opening of the window 28. The step of progressive approach of the box 1 to the casing 25 is illustrated in figure 10, where arrows are also shown that indicate the movement and the rotation direction of the movable arms 30 and the direction of translation of the window 38. In the condition in which the fixed arms 29 have completely penetrated within the respective housings 35, the size of the first angle is comprised between 60° and 90° or between 80° and 90°; optionally, in this condition, the size of the first angle is substantially equal to 90°.

At this point in the process, the box 1 is engaged on the casing 25, the window 28 is open and the functional elements 13 are in the retracted position inasmuch as the door 1 is open. This condition, in which the functional elements 13 are positioned frontally relative to the conductor bars 2 and spaced apart therefrom, is illustrated by way of example in figure 14. In order to enable the electrical connection between the functional elements 13 and the respective conductor bars 2, the process further comprises the step of closing the door 6. Closing the door 6 causes the advance of the safety means 21 that is operatively interposed between the door 6 and the functional elements 13; this advance, by causing the transition of the functional elements 13 from the retracted position to the extracted position, causes the electrical and mechanical connection of the functional elements 13 to the respective conductor bars 2. This condition of electrical connection of the functional elements 13 to the respective conductor bars 2 is illustrated by way of example in figure 14A, in which each functional element 13 is illustrated at the moment of surrounding a respective conductor bar 2. The process thus enables the box 1 to be installed safely on the casing 25 because, when installing the box 1 on the casing 25, the functional elements 13 in the box 1 are not powered up and are not traversed by electrical current. The high degree of safety of the box 1 and of the process of installation of the box 1 is due to the fact that the electrical and mechanical connection of the functional elements 13 to the respective conductor bars 2 takes place only subsequently, following the closure of the door 6 of the box 1. The safety means and the mounting means thus complement themselves, ensuring maximum operator and/or maintenance person protection.

### ADVANTAGES OF THE INVENTION

The present invention makes it possible to obtain one or more of the following advantages and to solve one or more of the problems encountered in the prior art.

Above all, the invention provides a box 1 provided with a degree of safety that is greater than that of junction boxes known today. This is possible because of the safety means 21 of the box 1, which enable the functional elements 13 to be connected to the respective conductor bars 2 only in concomitance with the closure of the door 6. This technical solution has the following practical consequence: by assembling the box 1 with the door 6 open, the functional elements 13 present in the box are not powered up during installation of the box 1 on the casing 25 and are not traversed by electrical current, and accordingly the operator tasked with installing the box 1 can operate in conditions of great safety, without the risk of being electrocuted by the voltage in play.

A further advantage of the invention consists of the fact that the operator can perform operations such as maintenance and/or replacement of the box 1 or of some of its components, in a condition of great safety, i.e. in a condition in which the functional elements 13 (and thus the box 1) are not powered up. In fact, in order to be able to access the internal volume of the box 1, the operator must necessarily open the door 6 of the box 1. This operation, because of the safety means 21, causes the electrical disconnection of the functional elements 13; at this point, the operator can work in complete safety on the box 1.

Further, the invention is advantageous inasmuch as it prevents undesired access to the conductor bars 2. In other words, the mounting means 27 ensures that the connection between the functional elements 13 and conductor bars 2 can occur only with the box 1 engaged and disposed in front of the casing 25. Substantially, the window 28 of the casing 25 acts as an obstacle to undesired, and potentially hazardous, access to the conductor bars 2.

The invention is moreover convenient to use and easy to implement and is suitable for numerous implementation variants that fall within the scope of protection of the following claims.

## Claims

1. A box (1) suitable for being used as a junction box for electrical installations of the type with prefabricated electrical conduits including one or more conductor bars (2), comprising a plurality of walls (3, 3a, 3b, 3c, 3d, 3e, 3f) assembled together in such a way as to define an internal volume of the box (1), and further comprising
a mounting means (27) configured to be operatively interposed between said box (1) and a component (28) associated with said prefabricated electrical conduit, said mounting means (27) comprising:
- a positioning means (29) for positioning said box (1) relative to said prefabricated electrical conduit, said positioning means (29) comprising at least one fixed arm and being disposed on said box (1) in such a way as to project at least partially from one of said walls (3, 3a, 3b, 3c, 3d, 3e, 3f);
- a moving means (30) for moving said component (28) associated with said prefabricated electrical conduit, said moving means (30) being disposed on said box (1) in such a way as to project at least partially from the same wall that said positioning means (29) project from,
**characterized in that** said moving means (30) comprises at least one movable arm, said movable arm (30) being configured to rotate relative to said fixed arm (29) in opposition contrast to a hinge with an elastic element (31), such as a spring,
and **in that** a free end (30a) of said at least one movable arm (30) is shaped in such a way as to be able to grip a portion (33) of said component (28) associated with said prefabricated electrical conduit.

2. The box according to claim 1, wherein said positioning means (29) comprises a pair of fixed arms and said moving means (30) comprises a pair of movable arms, said fixed arms (29) and said movable arms (30) being disposed symmetrically on said box (1).

3. The box according to claim 1 or 2, further comprising a first opening (4) fashioned in a first wall (3a) of said walls (3, 3a, 3b, 3c, 3d, 3e, 3f) of said box (1), said positioning means (29) and said moving means (30) protruding from said first opening (4) and being positioned in such a way that the installation of said box (1) with said prefabricated electrical conduit requires that said first opening (4) be disposed in front of said component (28) associated with said prefabricated electrical conduit.

4. The box (1) according to any one of claims 1 to 3, further comprising:
- at least one functional element (13) disposed at least partially in said internal volume, said functional element (13) being suitable for drawing electrical current from one of said conductor bars (2);
- a first opening (4) fashioned in a first wall (3a) of said walls (3, 3a, 3b, 3c, 3d, 3e, 3f) of said box (1), said first opening (4) being suitable for enabling the connection of said at least one functional element (13) to the respective conductor bar (2);
- a second opening (5) fashioned in a second wall (3b) of said walls (3, 3a, 3b, 3c, 3d, 3e, 3f) of said box (1), said second opening (5) being suitable for enabling access to said at least one functional element (13), said second wall (3b) of said walls (3, 3a, 3b, 3c, 3d, 3e, 3f) being advantageously the wall of said box that is opposite said first wall (3a) of said walls (3, 3a, 3b, 3c, 3d, 3e, 3f);
- a door (6) for closing said second opening (5);
the box (1) further comprises a safety means (21) operatively interposed between said door (6) and said at least one functional element (13) and configured so that the connection of said at least one functional element (13) to the respective conductor bar (2) can take place only in concomitance with the closure of said door (6), wherein said safety means (21) is optionally further configured so that the opening of said door (6) causes the disconnection of said at least one functional element (13) from the respective conductor bar (2).

5. The box according to claim 4, wherein said at least one functional element (13) is capable of taking on, relative to said box (1), an extracted position, in which it can be connected to the respective conductor bar (2), and a retracted position, wherein it cannot be connected to the respective conductor bar (2), the movement of closing said door (6) automatically causing the passage of said at least one functional element (13) from said retracted position to said extracted position.

6. The box according to claim 4, wherein said door (6) is configured to move with rotational motion, whereas said at least one functional element (13) is configured to move with translational motion.

7. The box according to claim 4 or 5 or 6, wherein said safety means (21) comprises a control member (22) housed in said internal volume and said at least one functional element (13) comprises:
- a first terminal (14) configured to open out elastically in order to make a connection of said at least one functional element (13) to the respective conductor bar (2);
- a second terminal (15), for example a terminal block, suitable for housing an electrical conductor intended to carry the electrical current drawn through said at least one functional element (13) outside said internal volume;
- a seat (19) or an abutment surface (20), intended to cooperate with said control member (22);
wherein said control member (22) is inserted into said seat (19) in such a way as to obtain a bilateral constraint between the control member (22) and said at least one functional element (13), so that:
- the closure of the door (6) automatically causes the application of a push of the control member (22) on the functional element (13) such as to obtain a movement of the same away from the box and the exit of a portion of the functional element (13) from the first opening (4) until said at least one functional element (13) is connected to the respective conductor bar (2), and
- the opening of the door (6) automatically causes the application of a push of the control member (22) on the functional element (13) such as to obtain a greater penetration of the functional element (13) into the box until said at least one functional element (13) is disconnected from the respective conductor bar (2), wherein said control member is optionally a pin, the direction of extension of said pin (22) being substantially orthogonal to the direction along which the translational movement of said at least one functional element is enabled (13).

8. The box according to claim 7, wherein said box comprises a plurality of functional elements (13), each of said functional elements (13) comprising a respective seat (19) or a respective abutment surface (20), the seats (19) and/or abutment surfaces (20) being intended to cooperate with the same control member (22), in particular with the same pin.

9. The box according to claim 4 or 5 or 6 or 7 or 8, wherein said safety means (21) comprises at least one activation element (23) for activating said control member (22), the activation element (23) being applied to the surface of said door (6) facing towards said at least one functional element (13).

10. The box according to claim 9, wherein said at least one activation element (23) comprises a cam surface (24) suitable for abutting said pin (22) and causing the movement thereof relative to said box, wherein the profile of said cam (24) is optionally such as to define a recess (24a), said pin (22) being housed in said recess (24a) when said door (6) is in the closed condition.

11. The box according to claim 10, wherein two activation elements (23) for activating said control member (22) are applied on the surface of said door (6) facing towards said at least one functional element (13) and wherein each of said activation elements (23) comprises a respective cam surface (24) suitable for abutting an end portion of said pin (22).

12. A system (26) comprising:
- a box (1) according to any one of claims 1 to 11;
- a prefabricated electrical conduit comprising:
i) at least one conductor bar (2);
ii) a casing (25) for containing said at least one conductor bar (2);
iii) at least one opening (32) fashioned in said casing (25) for access to said at least one conductor bar (2);
iv) a closing window (28) for closing said at least one opening (32),
**characterised in that** said component associated with said prefabricated electrical conduit coincides with said window (28).

13. The system according to claim 12, wherein said window (28) is slidable relative to said casing (25), the sliding of said window (28) taking place in particular in opposition to at least one elastic element (34), such as a spring, wherein said window (28) comprises in particular an abutment means (33) configured to be gripped by the free end (30a) of said at least one movable arm (30).

14. The system according to claim 13, wherein said casing (25) comprises at least one housing (35) configured to accommodate the free end (29a) of at least one fixed arm (29).

15. The system according to claim 14, wherein, during the penetration of the free end (29a) of said at least one fixed arm (29) into said at least one housing (35), said abutment means (33) is engaged in the free end (30a) of said at least one movable arm (30) and the hinge between said at least one fixed arm (29) and said at least one movable arm (30) determines the opening of said window (28).

## Patentansprüche

1. Kasten (1), geeignet zur Verwendung als ein Verteilerkasten für elektrische Installationen der Art mit vorgefertigten elektrischen Leitungen, die eine oder mehrere Stromschienen (2) beinhalten, mehrere Wände (3, 3a, 3b, 3c, 3d, 3e, 3f) umfassend, die derart zusammengefügt sind, dass sie ein Innenvolumen des Kastens (1) definieren, und ferner Folgendes umfassend:
- ein Montagemittel (27), das dafür gestaltet ist, funktionsfähig zwischen dem Kasten (1) und einer Komponente (28) eingesetzt zu sein, die der vorgefertigten elektrischen Leitung zugeordnet ist, wobei das Montagemittel (27) Folgendes umfasst:
- ein Positionierungsmittel (29) zum Positionieren des Kastens (1) relativ zu der vorgefertigten elektrischen Leitung, wobei das Positionierungsmittel (29) mindestens einen feststehenden Arm umfasst und derart an dem Kasten (1) angeordnet ist, dass es zumindest teilweise aus einer der Wände (3, 3a, 3b, 3c, 3d, 3e, 3f) hervorsteht,
- ein Bewegungsmittel (30) zum Bewegen der Komponente (28), die der vorgefertigten elektrischen Leitung zugeordnet ist, wobei das Bewegungsmittel (30) derart an dem Kasten (1) angeordnet ist, dass es zumindest teilweise aus der gleichen Wand hervorsteht, aus der das Positionierungsmittel (29) hervorsteht,
**dadurch gekennzeichnet, dass** das Bewegungsmittel (30) mindestens einen beweglichen Arm umfasst, wobei der bewegliche Arm (30) dafür gestaltet ist, sich relativ zu dem feststehenden Arm (29) entgegen einem Gelenk mit einem elastischen Element (31), wie beispielsweise einer Feder, zu drehen,
und dadurch, dass ein freies Ende (30a) des mindestens einen beweglichen Arms (30) derart geformt ist, dass es in der Lage ist, einen Abschnitt (33) der Komponente (28) zu ergreifen, die der vorgefertigten elektrischen Leitung zugeordnet ist.

2. Kasten nach Anspruch 1, wobei das Positionierungsmittel (29) ein Paar feststehender Arme umfasst und das Bewegungsmittel (30) ein Paar beweglicher Arme umfasst, wobei die feststehenden Arme (29) und die beweglichen Arme (30) symmetrisch an dem Kasten (1) angeordnet sind.

3. Kasten nach Anspruch 1 oder 2, ferner eine erste Öffnung (4) umfassend, die in einer ersten Wand (3a) der Wände (3, 3a, 3b, 3c, 3d, 3e, 3f) des Kastens (1) geformt ist, wobei das Positionierungsmittel (29) und das Bewegungsmittel (30) aus der ersten Öffnung (4) hervorstehen und derart positioniert sind, dass die Installation des Kastens (1) mit der vorgefertigten elektrischen Leitung erfordert, dass die erste Öffnung (4) vor der Komponente (28) angeordnet ist, welche der vorgefertigten elektrischen Leitung zugeordnet ist.

4. Kasten nach einem der Ansprüche 1 bis 3, ferner Folgendes umfassend:
- mindestens ein funktionales Element (13), das zumindest teilweise in dem Innenvolumen angeordnet ist, wobei das funktionale Element (13) geeignet ist, elektrischen Strom von einer der Stromschienen (2) zu ziehen,
- eine erste Öffnung (4), die in einer ersten Wand (3a) der Wände (3, 3a, 3b, 3c, 3d, 3e, 3f) des Kastens (1) geformt ist, wobei die erste Öffnung (4) geeignet ist, die Verbindung des mindestens einen funktionalen Elements (13) mit der entsprechenden Stromschiene (2) zu ermöglichen,
- eine zweite Öffnung (5), die in einer zweiten Wand (3b) der Wände (3, 3a, 3b, 3c, 3d, 3e, 3f) des Kastens (1) geformt ist, wobei die zweite Öffnung (5) geeignet ist, den Zugang zu dem mindestens einen funktionalen Element (13) zu ermöglichen, wobei die zweite Wand (3b) der Wände (3, 3a, 3b, 3c, 3d, 3e, 3f) vorteilhafterweise die Wand des Kastens ist, die gegenüber der ersten Wand (3a) der Wände (3, 3a, 3b, 3c, 3d, 3e, 3f) liegt,
- eine Klappe (6) zum Schließen der zweiten Öffnung (5),
wobei der Kasten (1) ferner Sicherheitsmittel (21) umfasst, die funktionsfähig zwischen der Klappe (6) und dem mindestens einen funktionalen Element (13) eingesetzt und derart gestaltet sind, dass die Verbindung des mindestens einen funktionalen Elements (13) mit der entsprechenden Stromschiene (2) nur gleichzeitig mit dem Schließen der Klappe (6) erfolgen kann, wobei das Sicherheitsmittel (21) optional ferner derart gestaltet ist, dass das Öffnen der Klappe (6) das Trennen des mindestens einen funktionalen Elements (13) von der entsprechenden Stromschiene (2) bewirkt.

5. Kasten nach Anspruch 4, wobei das mindestens eine funktionale Element (13) in der Lage ist, relativ zu dem Kasten (1) eine ausgefahrene Position einzunehmen, in der es mit der entsprechenden Stromschiene (2) verbunden werden kann, und eine eingefahrene Position, in der es nicht mit der entsprechenden Stromschiene (2) verbunden werden kann, wobei die Bewegung des Schließens der Klappe (6) automatisch den Übergang des mindestens einen funktionalen Elements (13) von der eingefahrenen Position in die ausgefahrene Position bewirkt.

6. Kasten nach Anspruch 4, wobei die Klappe (6) dafür gestaltet ist, sich mit einer Drehbewegung zu bewegen, wohingegen das mindestens eine funktionale Element (13) dafür gestaltet ist, sich mit einer translatorischen Bewegung zu bewegen.

7. Kasten nach Anspruch 4 oder 5 oder 6, wobei das Sicherheitsmittel (21) ein Steuerglied (22) umfasst, das in dem Innenvolumen untergebracht ist, und wobei das mindestens eine funktionale Element (13) Folgendes umfasst:
- einen ersten Anschluss (14), der dafür gestaltet ist, sich elastisch nach außen zu öffnen, um eine Verbindung des mindestens einen funktionalen Elements (13) mit der entsprechenden Stromschiene (2) herzustellen,
- einen zweiten Anschluss (15), zum Beispiel einen Anschlussblock, der geeignet ist, einen elektrischen Leiter unterzubringen, welcher dafür vorgesehen ist, den elektrischen Strom, der durch das mindestens eine funktionale Element (13) gezogen wird, nach außerhalb des Innenvolumens zu führen,
- einen Sitz (19) oder eine Anschlagfläche (20), dafür vorgesehen, mit dem Steuerglied (22) zusammenzuarbeiten,
- wobei das Steuerglied (22) derart in den Sitz (19) eingesetzt ist, dass eine beidseitige Bindung zwischen dem Steuerglied (22) und dem mindestens einen funktionalen Element (13) erzielt ist, so dass:
- das Schließen der Klappe (6) automatisch das Anwenden eines Drucks des Steuerglieds (22) auf das funktionale Element (13) derart bewirkt, dass eine Bewegung desselben weg von dem Kasten und das Heraustreten eines Abschnitts des funktionalen Elements (13) aus der ersten Öffnung (4), bis das mindestens eine funktionale Element (13) mit der entsprechenden Stromschiene (2) verbunden ist, erzielt wird, und
- das Öffnen der Klappe (6) automatisch das Anwenden eines Drucks des Steuerglieds (22) auf das funktionale Element (13) derart bewirkt, dass ein größeres Eindringen des funktionalen Elements (13) in den Kasten, bis das mindestens eine funktionale Element (13) von der entsprechenden Stromschiene (2) getrennt ist, erzielt wird, wobei das Steuerglied optional ein Stift ist, die Richtung der Erstreckung des Stifts (22) im Wesentlichen rechtwinklig zu der Richtung liegt, in welcher die translatorische Bewegung des mindestens einen funktionalen Elements (13) ermöglicht ist.

8. Kasten nach Anspruch 7, wobei der Kasten mehrere funktionale Elemente (13) umfasst, wobei jedes der funktionalen Elemente (13) einen entsprechenden Sitz (19) oder eine entsprechende Anschlagfläche (20) umfasst, wobei die Sitze (19) und/oder die Anschlagflächen (20) dafür vorgesehen sind, mit demselben Steuerglied (22) zusammenzuarbeiten, insbesondere mit demselben Stift.

9. Kasten nach Anspruch 4 oder 5 oder 6 oder 7 oder 8, wobei das Sicherheitsmittel (21) mindestens ein Aktivierungselement (23) zum Aktivieren des Steuergliedes (22) umfasst, wobei das Aktivierungselement (23) an der Oberfläche der Klappe (6) angebracht ist, die zur dem mindestens einen funktionalen Element (13) weist.

10. Kasten nach Anspruch 9, wobei das mindestens eine Aktivierungselement (23) eine Nockenfläche (24) umfasst, die geeignet ist, an dem Stift (22) anzuliegen und dessen Bewegung relativ zu dem Kasten zu bewirken, wobei das Profil des Nockens (24) optional derart ist, dass eine Vertiefung (24a) definiert ist, wobei der Stift (22) in der Vertiefung (24a) untergebracht ist, wenn sich die Klappe (6) im geschlossenen Zustand befindet.

11. Kasten nach Anspruch 10, wobei an der Oberfläche der Klappe (6), die zu dem mindestens einen funktionalen Element (13) weist, zwei Aktivierungselemente (23) zum Aktivieren des Steuerglieds (22) angebracht sind und wobei jedes der Aktivierungselemente (23) eine entsprechende Nockenfläche (24) umfasst, die geeignet ist, an einem Endabschnitt des Stifts (22) anzuliegen.

12. System (26), Folgendes umfassend:
- einen Kasten (1) nach einem der Ansprüche 1 bis 11,
- eine vorgefertigte elektrische Leitung, die Folgendes umfasst:
I) mindestens eine Stromschiene (2),
II) ein Gehäuse (25) zum Enthalten der mindestens einen Stromschiene (2),
III) mindestens eine Öffnung (32), die in dem Gehäuse (25) für den Zugang zu der mindestens einen Stromschiene (2) geformt ist,
IV) ein Verschlussfenster (28) zum Verschließen der mindestens einen Öffnung (32),
**dadurch gekennzeichnet, dass** sich die Komponente, die der vorgefertigten elektrischen Leitung zugeordnet ist, mit dem Fenster (28) deckt.

13. System nach Anspruch 12, wobei das Fenster (28) relativ zu dem Gehäuse (25) gleitfähig ist, wobei das Gleiten des Fensters (28) insbesondere entgegen mindestens einem elastischen Element (34) erfolgt, wie beispielsweise einer Feder, wobei das Fenster (28) insbesondere ein Anschlagmittel (33) umfasst, das dafür gestaltet ist, von dem freien Ende (30a) des mindestens einen beweglichen Arms (30) ergriffen zu werden.

14. System nach Anspruch 13, wobei das Gehäuse (25) mindestens eine Einhausung (35) umfasst, die dafür gestaltet ist, das freie Ende (29a) mindestens eines feststehenden Arms (29) zu beherbergen.

15. System nach Anspruch 14, wobei das Anschlagmittel (33) während des Eindringens des freien Endes (29a) des mindestens einen feststehenden Arms (29) in die mindestens eine Einhausung (35) mit dem freien Ende (30a) des mindestens einen beweglichen Arms (30) in Eingriff steht und das Gelenk zwischen dem mindestens einen feststehenden Arm (29) und dem mindestens einen beweglichen Arm (30) das Öffnen des Fensters (28) bestimmt.

## Revendications

1. Boîte (1) adaptée à une utilisation comme boîte de dérivation des installations électriques du type avec conduits électriques préfabriqués comprenant une ou plusieurs barres conductrices (2), comprenant une pluralité de parois (3, 3a, 3b, 3c, 3d, 3e, 3f) assemblées de manière à définir un volume interne de la boîte (1), et comprenant en outre un moyen de montage (27) configuré pour être interposé de manière opérationnelle entre ladite boîte (1) et un composant (28) associé audit conduit électrique préfabriqué, ledit moyen de montage (27) comprenant :
- un moyen de positionnement (29) permettant de disposer ladite boîte (1) par rapport audit conduit électrique préfabriqué, ledit moyen de positionnement (29) comprenant au moins un bras fixe et étant disposé sur ladite boîte (1) de manière à faire saillie au moins partiellement de l'une desdites parois (3, 3a, 3b, 3c, 3d, 3e, 3f);
- un moyen de déplacement (30) permettant de déplacer ledit composant (28) associé audit conduit électrique préfabriqué, ledit moyen de déplacement (30) étant disposé sur ladite boîte (1) de manière à faire saillie au moins partiellement de la même paroi que celle de laquelle fait saillie ledit moyen de positionnement (29), **caractérisé en ce que** ledit moyen de déplacement (30) comprend au moins un bras mobile, ledit bras mobile (30) étant configuré pour tourner autour dudit bras fixe (29) en opposition contraste avec une charnière ayant un élément élastique (31), tel qu'un ressort, et **en ce qu'**une extrémité libre (30a) dudit au moins un bras mobile (30) est formée de manière à pouvoir saisir une partie (33) dudit composant (28) associé audit conduit électrique préfabriqué.

2. Boîte selon la revendication 1, dans laquelle ledit moyen de positionnement (29) comprend une paire de bras fixes et ledit moyen de déplacement (30) comprend une paire de bras mobiles, lesdits bras fixes (29) et lesdits bras mobiles (30) étant disposés symétriquement sur ladite boîte (1).

3. Boîte selon la revendication 1 ou 2, comprenant en outre une première ouverture (4) façonnée dans une première paroi (3a) desdites parois (3, 3a, 3b, 3c, 3d, 3e, 3f) de ladite boîte (1), ledit moyen de positionnement (29) et ledit moyen de déplacement (30) faisant saillie de ladite première ouverture (4) et étant positionnés de telle sorte que l'installation de ladite boîte (1) avec ledit conduit électrique préfabriqué nécessite que ladite première ouverture (4) soit disposée en face dudit composant (28) associé audit conduit électrique préfabriqué.

4. Boîte (1) selon l'une quelconque des revendications 1 à 3 comprenant en outre :
- au moins un élément fonctionnel (13) disposé au moins partiellement dans ledit volume interne, ledit élément fonctionnel (13) étant adapté pour tirer du courant électrique de l'une desdites barres conductrices (2) ;
- une première ouverture (4) façonnée dans une première paroi (3a) desdites parois (3, 3a, 3b, 3c, 3d, 3e, 3f) de ladite boîte (1), ladite première ouverture (4) étant adaptée pour permettre la connexion dudit au moins un élément fonctionnel (13) à la barre conductrice respective (2) ;
- une deuxième ouverture (5) façonnée dans une deuxième paroi (3b) desdites parois (3, 3a, 3b, 3c, 3d, 3e, 3f) de ladite boîte (1), ladite deuxième ouverture (5) étant adaptée pour permettre d'accéder audit au moins un élément fonctionnel (13), ladite deuxième paroi (3b) desdites parois (3, 3a, 3b, 3c, 3d, 3e, 3f) étant avantageusement la paroi de ladite boîte qui est opposée à ladite première paroi (3a) desdites parois (3, 3a, 3b, 3c, 3d, 3e, 3f) ;
- une porte (6) pour fermer ladite deuxième ouverture (5) ;
la boîte (1) comprend en outre un moyen de sécurité (21) interposé de manière opérationnelle entre ladite porte (6) et ledit au moins un élément fonctionnel (13) et configuré de sorte que la connexion dudit au moins un élément fonctionnel (13) à la barre conductrice respective (2) ne peut avoir lieu qu'en concomitance avec la fermeture de ladite porte (6), dans laquelle ledit moyen de sécurité (21) est en outre configuré de manière optionnelle de sorte que l'ouverture de ladite porte (6) provoque la déconnexion dudit au moins un élément fonctionnel (13) de la barre conductrice respective (2).

5. Boîte selon la revendication 4, dans laquelle ledit au moins un élément fonctionnel (13) est capable de prendre, par rapport à ladite boîte (1), une position extraite, dans laquelle il peut être connecté à la barre conductrice respective (2), et une position rétractée, dans laquelle il ne peut pas être connecté à la barre conductrice respective (2), le mouvement de fermeture de ladite porte (6) provoquant automatiquement le passage dudit au moins un élément fonctionnel (13) de ladite position rétractée à ladite position extraite.

6. Boîte selon la revendication 4, dans laquelle ladite porte (6) est configurée pour se déplacer par un mouvement de rotation, tandis que ledit au moins un élément fonctionnel (13) est configuré pour se déplacer par un mouvement de translation.

7. Boîte selon la revendication 4, 5 ou 6, dans laquelle ledit moyen de sécurité (21) comprend un élément de commande (22) logé dans ledit volume interne, et ledit au moins un élément fonctionnel (13) comprend :
- une première borne (14) configurée pour s'ouvrir de manière élastique afin de réaliser une connexion dudit au moins un élément fonctionnel (13) à la barre conductrice respective (2) ;
- une deuxième borne (15), par exemple un bornier, apte à recevoir un conducteur électrique destiné à transporter le courant électrique tiré à travers ledit au moins un élément fonctionnel (13) en dehors dudit volume interne ;
- un siège (19) ou une surface de butée (20), destiné à coopérer avec ledit élément de commande (22) ;
dans lequel ledit élément de commande (22) est inséré dans ledit siège (19) de manière à obtenir une contrainte bilatérale entre l'élément de commande (22) et ledit au moins un élément fonctionnel (13), de sorte que :
- la fermeture de la porte (6) provoque automatiquement l'application d'une poussée de l'élément de commande (22) sur l'élément fonctionnel (13) de manière à obtenir un mouvement de celui-ci à l'écart de la boîte et la sortie d'une partie de l'élément fonctionnel (13) de la première ouverture (4) jusqu'à ce que ledit au moins un élément fonctionnel (13) soit connecté à la barre conductrice respective (2), et
- l'ouverture de la porte (6) provoque automatiquement l'application d'une poussée de l'élément de commande (22) sur l'élément fonctionnel (13) de manière à obtenir une plus grande pénétration de l'élément fonctionnel (13) dans la boîte jusqu'à ce que ledit au moins un élément fonctionnel (13) soit déconnecté de la barre conductrice respective (2), dans lequel ledit élément de commande est facultativement une broche, la direction d'extension de ladite broche (22) étant sensiblement orthogonale à la direction le long de laquelle le mouvement de translation dudit au moins un élément fonctionnel (13) est autorisé.

8. Boîte selon la revendication 7, dans laquelle ladite boîte comprend une pluralité d'éléments fonctionnels (13), chacun desdits éléments fonctionnels (13) comprenant un siège respectif (19) ou une surface de butée respective (20), les sièges (19) et/ou les surfaces de butée (20) étant destinés à coopérer avec le même élément de commande (22), en particulier avec la même broche.

9. Boîte selon la revendication 4, 5, 6, 7 ou 8, dans laquelle ledit moyen de sécurité (21) comprend au moins un élément d'activation (23) permettant d'activer ledit élément de commande (22), l'élément d'activation (23) étant appliqué sur la surface de ladite porte (6) tournée vers ledit au moins un élément fonctionnel (13).

10. Boîte selon la revendication 9, dans laquelle ledit au moins un élément d'activation (23) comprend une surface de came (24) appropriée pour venir en butée contre ladite broche (22) et provoquer le mouvement de celle-ci par rapport à ladite boîte, dans laquelle le profil de ladite came (24) est optionnel de façon à définir un évidement (24a), ladite broche (22) étant logée dans ledit évidement (24a) lorsque ladite porte (6) est en position fermée.

11. Boîte selon la revendication 10, dans laquelle deux éléments d'activation (23) permettant d'activer ledit élément de commande (22) sont appliqués sur la surface de ladite porte (6) faisant face audit au moins un élément fonctionnel (13) et dans laquelle chacun desdits éléments d'activation (23) comprend une surface de came respective (24) appropriée pour venir en butée contre une partie d'extrémité de ladite broche (22).

12. Système (26) comprenant :
- une boîte (1) selon l'une quelconque des revendications 1 à 11 ;
- un conduit électrique préfabriqué comprenant :
i) au moins une barre conductrice (2) ;
ii) un boîtier (25) destiné à contenir ladite au moins une barre conductrice (2) ;
iii) au moins une ouverture (32) façonnée dans ledit boîtier (25) pour accéder à ladite au moins une barre conductrice (2) ;
iv) une fenêtre de fermeture (28) permettant de fermer ladite au moins une ouverture (32), **caractérisé en ce que** ledit composant associé audit conduit électrique préfabriqué coïncide avec ladite fenêtre (28).

13. Système selon la revendication 12, dans lequel ladite fenêtre (28) est coulissante par rapport audit boîtier (25), le coulissement de ladite fenêtre (28) s'effectuant notamment en opposition à au moins un élément élastique (34), tel qu'un ressort, dans lequel ladite fenêtre (28) comprend notamment un moyen de butée (33) configuré pour être saisi par l'extrémité libre (30a) dudit au moins un bras mobile (30).

14. Système selon la revendication 13, dans lequel ledit boîtier (25) comprend au moins un logement (35) configuré pour recevoir l'extrémité libre (29a) d'au moins un bras fixe (29).

15. Système selon la revendication 14, dans lequel, pendant la pénétration de l'extrémité libre (29a) dudit au moins un bras fixe (29) dans ledit au moins un logement (35), ledit moyen de butée (33) est engagé dans l'extrémité libre (30a) dudit au moins un bras mobile (30) et la charnière entre ledit au moins un bras fixe (29) et ledit au moins un bras mobile (30) détermine l'ouverture de ladite fenêtre (28).
